# EUROPÄISCHE PATENTSCHRIFT

(11) **EP 2 115 320 B1**
(45) Veröffentlichungstag und Bekanntmachung des Hinweises auf die Patenterteilung: **15.06.2011**
(21) Anmeldenummer: 08708176.6
(22) Anmeldetag: 25.01.2008
(51) Int. Cl.: B60K 6/547, B60K 6/365, B60K 6/40, F16H 3/72, F16H 3/66

(54) **MEHRGÄNGIGES PLANETENKOPPELGETRIEBE**
MULTI-SPEED PLANETARY COUPLING GEAR
TRAIN COMPLEXE À DEUX GROUPES PLANÉTAIRES MULTI-ÉTAGÉ

(30) Priorität: 03.02.2007 DE 102007005438
(43) Veröffentlichungstag der Anmeldung: 11.11.2009
(73) Patentinhaber: ZF Friedrichshafen AG, 88038 Friedrichshafen (DE)
(72) Erfinder: BORNTRÄGER, Kai, 88085 Langenargen (DE)
(86) Internationale Anmeldenummer: PCT/EP2008/050837
(87) Internationale Veröffentlichungsnummer: WO 2008/095789

(56) Entgegenhaltungen:
- DE-A1- 10 312 391
- DE-A1- 19 739 906
- DE-A1-102005 014 332
- FR-A- 2 859 669
- US-A- 4 070 927
- US-A- 4 070 927
- US-B1- 6 592 484

## Beschreibung

Die Erfindung betrifft ein mehrgängiges Planetenkoppelgetriebe gemäß der im Oberbegriff des Patentanspruches 1 näher definierten Art. Ein derartiges Planetenkoppelgetriebe ist aus der US4070927 bekannt.

Aus der Praxis bekannte lastschaltbare automatische Getriebe sind oft als Planetenkoppelgetriebe oder als Vorgelegegetriebe ausgeführt, welche primärseitig bzw. getriebeeingangsseitig mit einem vorzugsweise als hydrodynamischer Drehmomentwandler oder als Anfahrkupplung ausgeführten Anfahrelement ausgebildet sind. Dabei werden verschiedene Gangstufen der Getriebe über reibschlüssige Schaltelemente, wie nasslaufende Lamellenkupplungen oder Lamellenbremsen, eingestellt.

Um in den Getrieben Gangwechsel unter Last durchführen zu können, übernimmt das Schaltelement des Zielganges die Last, wobei die Synchronisation im Getriebe während eines Schlupfbetriebes des Schaltelementes des Zielganges realisiert wird. Während einer solchen Lastschaltung entsteht im Bereich des reibschlüssigen Schaltelementes des Zielganges aufgrund des Schlupfbetriebes Reibarbeit, die in Wärme umgewandelt wird.

Darüber hinaus sind auch als Doppelkupplungsgetriebe ausgeführte lastschaltbare Getriebe bekannt, bei welchen die Vorwahl eines Ganges in dem vor dem Gangwechsel lastlosen Teilgetriebe erfolgt und die zu diesem Teilgetriebe gehörende, geöffnete und nass- oder trockenlaufend ausgebildete Kupplung beim Schließen die Last übernimmt, wobei das Teilgetriebe während eines Schlupfbetriebes dieser Kupplung mit der Getriebeeingangswelle synchronisiert wird. Dabei ist bei Doppelkupplungsgetrieben, die ihren Bewegungszustand nach dem Vorwählen des Ganges in einem der beiden Teilgetriebe eingenommen haben, im Vergleich zu Planetenkoppelgetrieben oder Vorgelegegetrieben nur noch der Antriebsmotor über die Doppelkupplung auf die Zieldrehzahl des Zielganges zu führen.

Die vorbeschriebenen Getriebearten sind mit verschiedenen Komponenten zur Steuerung der Getriebe ausgebildet, wobei reibschlüssige Schaltelemente, wie Kupplungen oder Bremsen, elektrohydraulisch angesteuert werden. Insbesondere als nasslaufende Kupplungen oder Bremsen ausgeführte reibschlüssige Schaltelemente sind im Betrieb mit einem ausreichenden Kühlölvolumenstrom zu versorgen, um die im Schlupfbetrieb entstehende Reibungswärme abführen zu können. Sowohl für die Betätigung als auch für die Kühlölversorgung sind die Getriebe mit einer hydraulischen Steuerung ausgebildet, die in an sich bekannter Art und Weise mit wenigstens einer Hydraulikpumpeneinrichtung sowie mit weiteren Komponenten ausgeführt sind. Des Weiteren sind auch Getriebe bekannt, welche anstatt mit Lamellenkupplungen oder Lamellenbremsen mit Synchronisierungen ausgebildet sind, welche ebenfalls über eine entsprechende Aktuatorik betätigt werden und im Betrieb Reibungsverluste verursachen.

Nachteilhafterweise sind die oben genannten Getriebe im Vergleich zu mechanischen Handschaltgetrieben aufgrund der Reibungsverluste sowie der elektrohydraulischen Ansteuerung durch einen schlechteren Gesamtgetriebewirkungsgrad gekennzeichnet, wobei die Wirkungsgradverschlechterung auch durch die Pumpenaufnahmeleistung einer Hydraulikpumpeneinrichtung eines elektrohydraulischen Steuersystems sowie durch im Bereich der nasslaufenden Lamellenkupplungen und Lamellenbremsen auftretenden Schleppmomente verursacht wird. Zusätzlich ist von Nachteil, dass insbesondere während eines Schubbetriebes eines Fahrzeuges mit den vorbeschriebenen Getriebearten keine Energierückgewinnung durchführbar ist.

Antriebsstrangsysteme, mit welchen eine Energierückgewinnung durchführbar ist, sind sogenannte Hybridantriebe, die getriebeeingangsseitig mit einer elektrischen Maschine ausgebildet sind. Solche elektrischen Maschinen werden unter anderem auch als elektrodynamische Anfahrelemente eingesetzt.

Elektrodynamischen Anfahrelementen sind meist Planentenradsätze als Summengetriebe zugeordnet, wobei jeweils eine Summenwelle eines Planetenradsatzes mit dem Getriebeeingang eines Schaltgetriebes verbunden ist. Eine weitere Welle eines solchen Planetenradsatzes ist mit einer elektrischen Maschine bzw. einem elektrodynamischen Anfahrelement verbunden, während eine dritte Welle eines Planetenradsatzes mit einem Verbrennungsmotor eines Antriebsstranges eines Fahrzeuges wirkverbunden ist. Eine Welle des Planetenradsatzes wird während eines Anfahrvorganges eines Fahrzeuges über die elektrische Maschine, die beispielsweise mit einem Sonnenrad des dem elektrodynamischen Anfahrelementes zugeordneten Planetenradsatzes verbunden ist, abgebremst. Beim Nulldurchgang der Wellendrehzahl der mit dem Sonnenrad verbundenen Welle wechselt die elektrische Maschine vom generatorischen Betrieb in den motorischen Betrieb und beschleunigt die Welle auf die Drehzahl der Welle, welche mit dem Verbrennungsmotor verbunden ist. Bei Erreichen dieser Drehzahl drehen alle Wellen des Planetenradsatzes mit der gleichen Drehzahl und der Planetenradsatz ist über eine Kupplung überbrückbar. Ein derartiger Anfahrvorgang ist verschleißfrei und Verluste treten nur im Rahmen der Energiewandlung und der Speicherverluste sowie durch die Verzahnungen und Schleppmomente im Bereich der Lastschaltmomente auf.

Der Einfluss eines elektrodynamischen Anfahrelementes während Lastschaltungen in einem zugeordneten Getriebe ist nachteilhafterweise derart begrenzt ist, dass in Getrieben zugkraftunterbrechungsfreie Schaltvorgänge nur mit reibschlüssigen Schaltelementen durchführbar sind, die einen Wirkungsgrad eines Getriebes jedoch nachteilig beeinflussen.

In der US4070927A ist ein mehrgängiges Planetenkoppelgetriebe beschrieben, das eine Getriebeeingangswelle, eine Getriebeausgangswelle, mehrere Planetenradsätze sowie mehrere Schaltelementen aufweist, wobei in Abhängigkeit einer Betätigung der Schaltelemente verschiedene Übersetzungen darstellbar sind. In Verbindung stehen hierbei das Sonnenrad des ersten Planetenradsatzes mit der Getriebeeingangswelle, der Planetenträger des ersten Planetenradsatzes mit dem Hohlrad des zweiten Planetenradsatzes, der Planetenträger des zweiten Planetenradsatzes mit dem Hohlrad des dritten Planetenradsatzes, der Planetenträger des dritten Planetenradsatzes mit der Getriebeausgangswelle, und das Sonnenrad des zweiten Planetenradsatzes mit dem Sonnenrad des dritten Planetenradsatzes,

Der vorliegenden Erfindung liegt daher die Aufgabe zugrunde, ausgehend vom Stand der Technik ein mehrgängiges Planetenkoppelgetriebe zur Verfügung zu stellen, das mit einem guten Wirkungsgrad betreibbar ist und in der ersten Übersetzungsstufe Bauteile schonend betrieben werden kann.

Erfindungsgemäß wird diese Aufgabe mit einem mehrgängigen Planetenkoppelgetriebe gemäß den Merkmalen des Patentanspruches 1 gelöst

Bei dem erfindungsgemäßen mehrgängigen Planetenkoppelgetriebe sind wenigstens eine einen Rotor und einen Stator aufweisende elektrische Maschine, deren Stator drehfest mit einem gehäusefesten Bauteil und der Rotor mit dem Hohlrad des dritten Planetenradsatzes verbunden sind, und ein formschlüssiges Schaltelement, mittels welchem das Hohlrad des dritten Planetenradsatzes mit dem gehäusefesten Bauteil in einer ersten Übersetzungsstufe drehfest verbindbar ist, vorgesehen.

Grundsätzlich ersetzt die elektrische Maschine ein vorzugsweise reibschlüssig ausgeführtes Lastschaltelement eines herkömmlichen Planetenkoppelgetriebes, wobei mittels der elektrischen Maschine neben Getriebefunktionen, wie Lastschaltungen, verschleißfreie Anfahrvorgänge und dergleichen, auch diverse Hybridfunktionen, wie elektrodynamische, verlustreduzierte Anfahrvorgänge, Nutzbremsungen usw., durchführbar sind. Die mit der elektrischen Maschine darstellbaren Hybridfunktionen sind dabei von den Eigenschaften des Radsatzes sowie der Leistungsklasse der elektrischen Maschine abhängig.

Des Weiteren ist ein erfindungsgemäßes mehrgängiges Planetenkoppelgetriebe auf einfache Art und Weise in verschiedenen Ausbaustufen ausführbar, wobei ein mit dem erfindungsgemäßen mehrgängigen Planetenkoppelgetriebe ausgeführter Antriebsstrang eines Fahrzeuges ohne ein Anfahrelement, wie einen hydrodynamischen Drehmomentwandler oder eine reibschlüssige Anfahrkupplung, ausführbar ist. Des Weiteren ist ein mehrgängiges Planetenkoppelgetriebe, welches erfindungsgemäß an der Stelle eines Schaltelement mit einer elektrischen Maschine ausgeführt ist, anstatt reibschlüssigen Lastschaltelementen mit Klauenkupplungen sowie einer auf die Schmierölversorgung des Radsatzes reduzierten Hydraulik ausbildbar.

Das bedeutet, dass im Vergleich zu herkömmlichen Planetenkoppelgetrieben mit einem mehrgängigen Planetenkoppelgetriebe nach der Erfindung, das mit Klauenkupplungen ausgeführt ist, die beispielsweise mit einer elektromotorischen Aktuatorik betätigbar sind, bei entsprechender Ansteuerung und Anordnung einer ein Schaltelement des Planetenkoppelgetriebes ersetzenden elektrischen Maschine zugkraftunterbrechungsfreie Schaltungen auf einfache und kostengünstige Weise mit höheren Wirkungsgraden durchführbar sind.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau- und funktionsgleiche Bauteile dieselben Bezugszeichen verwendet werden.
Es zeigt:
- Fig. 1: eine stark schematisierte Darstellung eines Antriebsstranges ei- nes Fahrzeuges, welches mit einem mehrgängigen Planetenkop- pelgetriebe ausgebildet ist;
- Fig. 2: ein Räderschema einer ersten Ausführungsform des mehrgängi- gen Planetenkoppelgetriebes nach der Erfindung;
- Fig. 3: das Räderschema gemäß Fig. 2 in Verbindung mit einer als Kur- belwellen-Starter-Generator-Einheit für eine Brennkraftmaschine ausgebildeten elektrischen Maschine;
- Fig. 4: ein Räderschema einer zweiten Ausführungsform des mehrgängi- gen Planetenkoppelgetriebes nach der Erfindung und
- Fig. 5: Drehzahlverläufe verschiedener Wellen des mehrgängigen Plane- tenkoppelgetriebes nach der Erfindung über der Zeit, welche sich in Abhängigkeit einer Betätigung der einem Planetenradsatz zu- geordneten elektrischen Maschine einstellen.

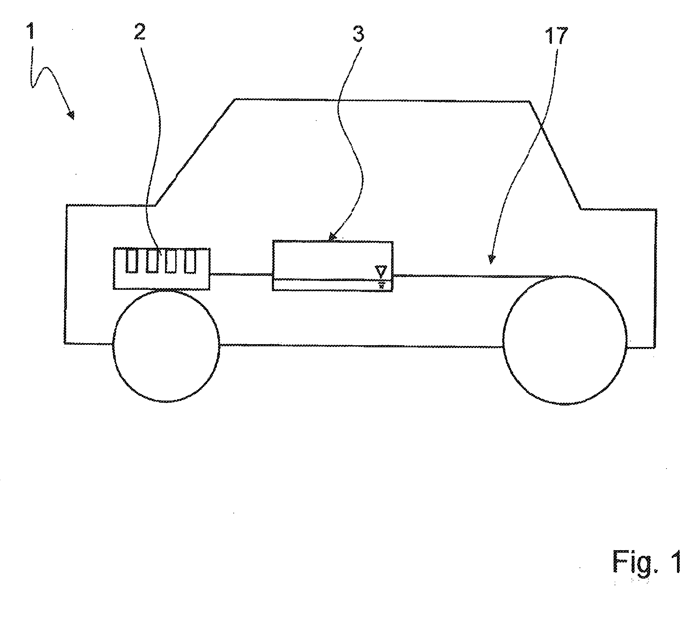

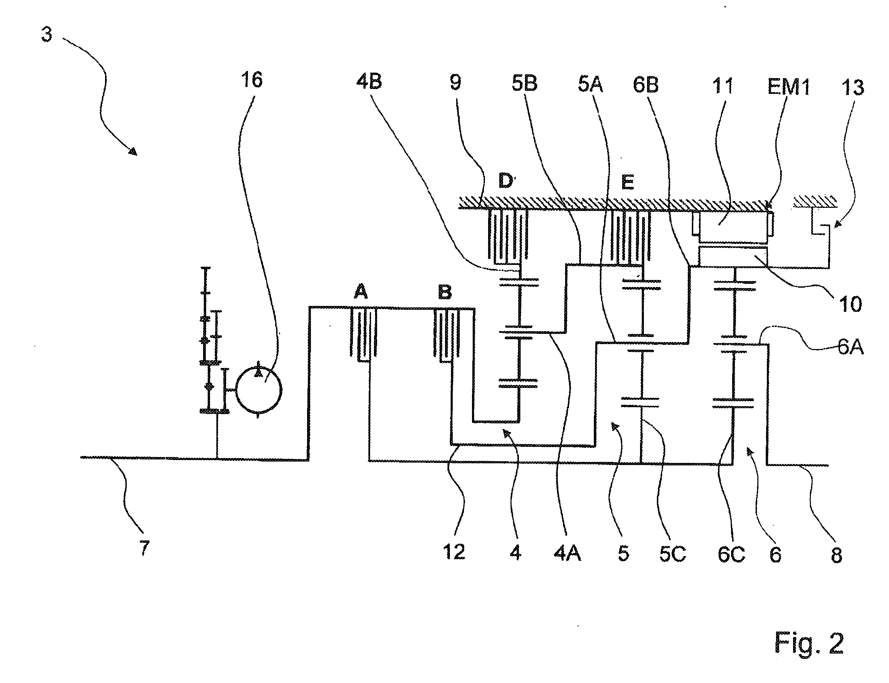

Fig. 1 zeigt eine stark schematisierte Darstellung eines Antriebsstranges 17 eines Fahrzeuges 1, welches in an sich bekannter Art und Weise mit einer Brennkraftmaschine 2 und einem mehrgängigen Planetenkoppelgetriebe 3 ausgeführt ist. Dabei sind in Fig. 2 bis Fig. 4 verschiedene Ausführungen des Planetenkoppelgetriebes 3 in Form von Räderschemata dargestellt, welche in der nachfolgenden Beschreibung näher erläutert werden.

Grundsätzlich sind mit den in der Zeichnung dargestellten Ausführungsformen des Planetenkoppelgetriebes 3, die lediglich beispielhafte Ausführungen darstellen, sechs Vorwärtsfahrstufen sowie eine Rückwärtsfahrstufe darstellbar. Die verschiedenen Übersetzungen sind in Abhängigkeit einer Betätigung verschiedener Schaltelemente A, B, D, E und einer vorliegend als Synchronmaschine ausgebildeten elektrischen Maschine EM1 darstellbar. Dabei sind die Schaltelemente A, B, D, E bei dem in Fig. 2 dargestellten Ausführungsbeispiel jeweils als reibschlüssige Schaltelemente ausgeführt. Ein Rotor 10 der elektrischen Maschine EM1 ist vorliegend mit dem Hohlrad 6B des dritten Planetenradsatzes 6 verbunden, während ein Stator 11 der elektrischen Maschine EM1 drehfest mit einem Gehäuse 9 wirkverbunden ist.

Das Planetenkoppelgetriebe 3 weist bei allen in der Zeichnung dargestellten Ausführungen drei jeweils dreiwellig ausgebildete Planetenradsätze 4, 5 und 6 auf, wobei ein Planetenträger 4A des ersten Planetenradsatzes 4 mit einem Hohlrad 5B des zweiten Planetenradsatzes 5 verbunden ist. Zusätzlich ist ein Planetenträger 5A des zweiten Planetenradsatzes 5 mit einem Hohlrad 6B des dritten Planetenradsatzes 6 wirkverbunden, während Sonnenräder 5C und 6C des zweiten Planetenradsatzes 5 und des dritten Planetenradsatzes 6 fest miteinander verbunden sind und über das als reibschlüssige Kupplung ausgeführte Schaltelement A mit einer Getriebeeingangswelle 7 in Wirkverbindung bringbar sind. Ein Planetenträger 6A des dritten Planetenradsatzes 6 ist mit einer Getriebeausgangswelle 8 des Planetenkoppelgetriebes 3 verbunden.

Die Schaltelemente D und E sind vorliegend als reibschlüssige Lamellenbremsen ausgeführt, wobei jeweils eine Hälfte der Schaltelemente D, E gehäusefest ausgeführt ist und die jeweils andere Hälfte mit dem Hohlrad 5B des zweiten Planetenradsatzes 5 bzw. mit einem Hohlrad 4B des ersten Planetenradsatzes 4 verbunden ist, um die Hohlräder 4B und 5B der Planetenradsätze 4 und 5 zum Darstellen verschiedener Übersetzungsstufen des Planetenkoppelgetriebes 3 drehfest mit dem Gehäuse 9 des Planetenkoppelgetriebes 3 verbinden zu können.

Eine erste Übersetzungsstufe des Planetenkoppelgetriebes 3 wird durch Schließen des Schaltelementes A und während eines generatorischen Betriebes der elektrischen Maschine EM1, während dem ein an dem dritten Planetenradsatz 6 anliegendes Drehmoment von der elektrischen Maschine EM1 abgestützt wird, dargestellt, wobei das Hohlrad 6B des dritten Planetenradsatzes 6 von der elektrischen Maschine EM1 auf Null setzbar ist. Gleichzeitig ist über die elektrische Maschine EM1 ein Anfahrvorgang ähnlich wie bei einem elektrodynamischen Anfahrelement durchführbar, wenn eine Getriebewelle 12 durch einen entsprechenden Betrieb der elektrischen Maschine EM1 abgebremst wird.

Um eine Energieaufnahme der elektrischen Maschine EM1 während der Darstellung der ersten Übersetzungsstufe bzw. der Anfahrübersetzung des Planetenkoppelgetriebes 3 zu begrenzen, ist ein als Klauenschaltelement ausgeführtes formschlüssiges Schaltelement 13 vorgesehen, mittels welchem das Hohlrad 6B des dritten Planetenradsatzes 6 drehfest mit dem Gehäuse 9 bzw. einem gehäusefesten Bauteil des Planetenkoppelgetriebes 3 verbindbar ist.

Bei einer Schaltung ausgehend von der ersten Übersetzungsstufe und geschlossenem formschlüssigen Schaltelement 13 wird das formschlüssige Schaltelement 13 vor dem Öffnen über die elektrische Maschine EM1 entlastet bzw. lastlos geschaltet und ist somit auf einfache und verschleißfreie Art und Weise ausrückbar, wobei bei geöffnetem formschlüssigen Schaltelement 13 das am dritten Planetenradsatz 6 anliegende Drehmoment von der elektrischen Maschine EM1 abgestützt wird, um die erste Übersetzungsstufe darstellen zu können.

Da ein Betrieb des Fahrzeuges 1 in der ersten Übersetzungsstufe selten über längere Zeiträume erfolgt und in der Regel bereits nach einer kurzen Anfahrphase eines Fahrzeuges ein Gangwechsel ausgehend von der der ersten Übersetzungsstufe in eine zweite Übersetzungsstufe anschließt, ist es zur Darstellung einer möglichst verlustfreien und zugkraftunterbrechungsfreien Lastschaltung vorgesehen, dass die Getriebewelle 12 über die elektrische Maschine EM1 auf eine Drehzahl geführt wird, die sie bei eingelegter zweiter Übersetzungsstufe im Planetenkoppelgetriebe 3 aufweist. Dieser Betriebszustand des Planetenkoppelgetriebes 3 ist auf einfache Art und Weise durch elektromaschinenseitige Einspeisung von Leistung bzw. Drehmoment in den dritten Planetenradsatz 6 umsetzbar, wobei im Planetenkoppelgetriebe 3 während der Synchronisierung der Getriebewelle 12 durch die elektrische Maschine EM1 nach wie vor die erste Übersetzungsstufe zugeschaltet ist und die dabei wirkenden Drehmomentverhältnisse im Planetenkoppelgetriebe 3 vorliegen.

Durch das Verändern der Drehzahl der Getriebewelle 12 von der zu der ersten Übersetzungsstufe äquivalenten Drehzahl des Hohlrades 5B des zweiten Planetenradsatzes 5 in Richtung der zu der zweiten Übersetzungsstufe äquivalenten Drehzahl, die im Wesentlichen Null ist, werden die beiden Hälften des Schaltelementes E über die elektrische Maschine EM1 synchronisiert. Das Schaltelement E wird im Synchronpunkt verlustfrei geschlossen. Diese Vorgehensweise ist grundsätzlich bei allen Hoch- und Rückschaltungen im Planetenkoppelgetriebe 3 anwendbar, um die Verlustleistung im Planetenkoppelgetriebe möglichst gering zu halten.

Prinzipiell ist ein mit dem Planetenkoppelgetriebe 3 gemäß Fig. 2 ausgeführtes Fahrzeug verschleißfrei anfahrbar, da das Antriebsmoment der Brennkraftmaschine 2 im Bereich der elektrischen Maschine EM1 berührungsfrei abgestützt wird. Zusätzlich ist bei gleichzeitig geschlossenen Schaltelementen D, E und A und bei abgeschalteter Brennkraftmaschine 2 auch ein rein elektrischer Antrieb des Fahrzeuges 1 über die elektrische Maschine EM1 durchführbar, womit ein Kraftstoffverbrauch des Fahrzeuges 1 auf einfache Art und Weise senkbar ist. Des Weiteren ist über die elektrische Maschine EM1 im Schubbetrieb des Fahrzeuges 1 ein Rekuperationsbetrieb und im motorischen Betrieb der elektrischen Maschine EM1 ein sogenannter Boostbetrieb durchführbar, wobei während des Boostbetriebes dem Abtrieb des Fahrzeuges 1 neben dem Antriebsmoment der Brennkraftmaschine 2 zusätzlich ein elektromaschinenseitiges Antriebsmoment zugeführt wird.

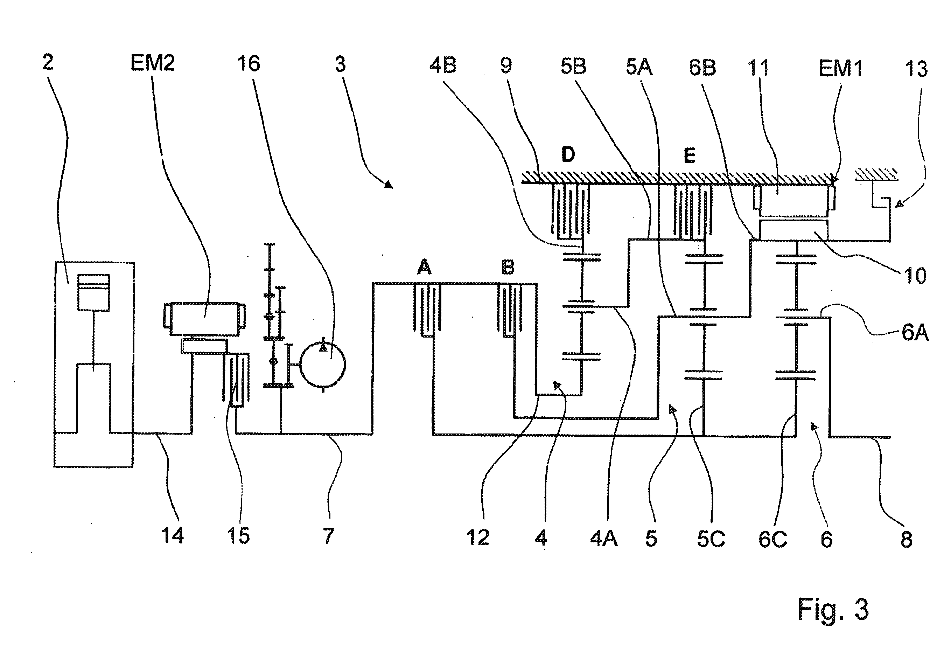

Das in Fig. 3 dargestellte Ausführungsbeispiel des Planetenkoppelgetriebes 3 ist getriebeeingangsseitig mit einer weiteren als Kurbelwellen-Starter-Generator-Einheit ausgeführten elektrischen Maschine EM2 ausgebildet, wobei eine Motorausgangswelle 14 über eine reibschlüssige Kupplung 15 mit der Getriebeeingangswelle 7 in Wirkverbindung bringbar ist. Die weitere elektrische Maschine EM2 ist im Wesentlichen für einen Start-Stopp-Betrieb der Brennkraftmaschine 2 und für eine elektrische Versorgung der elektrischen Maschine EM1 im motorischen Betrieb vorgesehen. Mit dieser Ausführungsform des Planetenkoppelgetriebes 3 sind zu den vorbeschriebenen und mittels der elektrischen Maschine EM1 darstellbaren Funktionalitäten zusätzlich ein Motor-Start-Stopp-Betrieb sowie ein elektrisch leistungsverzweigter Fahrbetrieb auf einfache und kostengünstige Art und Weise realisierbar.

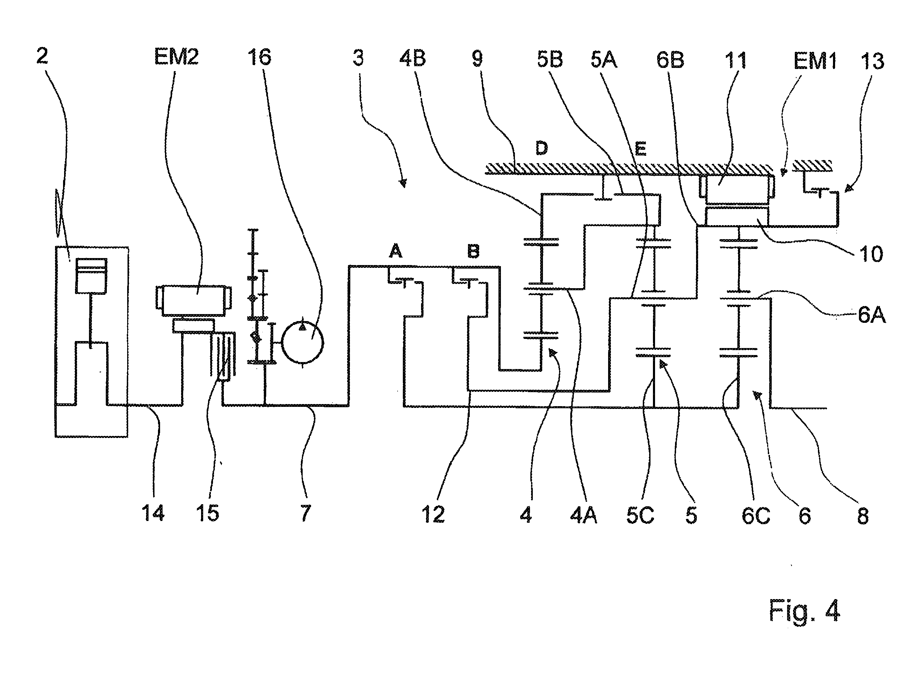

Fig. 4 zeigt ein Räderschema eines weiteren Ausführungsbeispieles des Planetenkoppelgetriebes 3 nach der Erfindung, welches grundsätzlich eine Weiterbildung des in Fig. 3 dargestellten Planetenkoppelgetriebes ist. Die Schaltelemente A, B, D und E des Planetenkoppelgetriebes 3 gemäß Fig. 4 sind als formschlüssige Schaltelemente ausgeführt, womit das Planetenkoppelgetriebe 3 ein klauengeschaltetes Hybridplanetengetriebe mit einer elektrischen Maschine EM1 ist, mit dem nahezu verlustfreie und zugkraftunterbrechungsfreie Lastschaltungen durchführbar sind, wenn die Schaltelemente A, B, D, E während der Schaltungen wirkungsgradoptimiert über die elektrische Maschine EM1 synchronisiert werden. Dabei ist das Planetenkoppelgetriebe 3 gemäß Fig. 3 im Vergleich zur Ausführungsform des Planetenkoppelgetriebes gemäß Fig. 4 durch die Ausgestaltung der Schaltelemente A, B, D, E als formschlüssige Schaltelemente bzw. als Klauenschaltelemente mit einem besseren Wirkungsgrad betreibbar, weil im Bereich von geöffneten Klauenschaltelementen oder formschlüssigen Schaltelementen im Gegensatz zu geöffneten reibschlüssigen Schaltelementen keine nennenswerten Schleppmomente auftreten.

Grundsätzlich steht der Wirkungsgrad des Planetenkoppelgetriebes 3 auch in Abhängigkeit der jeweils für die Betätigung der Schaltelemente A bis E verwendeten Aktuatorik. Deshalb ist ein Wirkungsgrad des mit formschlüssigen Schaltelementen ausgeführten Planetenkoppelgetriebes 3 gemäß Fig. 4 weiter verbesserbar, wenn die Schaltelemente A bis E nicht wie üblich über das Hydrauliksystem des Planetenkoppelgetriebes 3 sondern über einen elektromotorischen Antrieb oder dergleichen angesteuert werden. In derartigen Fällen ist das Hydrauliksystem des Planetengetriebes 3 mit einer gegenüber einer Pumpe eines herkömmlichen Hydrauliksystems reduzierten Leistungsaufnahme gekennzeichneten hydraulischen Pumpeneinrichtung 16 ausführbar, da von dieser lediglich ein Schmierölkreislauf des Planetenkoppelgetriebes zu versorgen ist und daher ein geringerer Förderstrom benötigt wird.

Damit die elektrische Maschine EM1 mit geringen äußeren Abmessungen ausführbar ist, wird das Antriebsmoment der Brennkraftmaschine 2 während der Lastübernahme in den höheren Übersetzungsstufen reduziert. Dies resultiert aus der Tatsache, dass während der Lastübernahme im Planetenkoppelgetriebe 3 Momente wie bei geschalteter erster Übersetzungsstufe wirken, während die Drehzahlzustände im Planetenkoppelgetriebe 3 den in der aktuell geschalteten höheren Übersetzungsstufe entsprechen. Wird das Antriebsmoment der Brennkraftmaschine 2 nicht reduziert, ist die elektrische Maschine EM1 sehr groß zu dimensionieren, um das Antriebsmoment der Brennkraftmaschine 2 abstützen zu können. Ohne Reduzierung des Antriebsmomentes der Brennkraftmaschine während einer Hochschaltung von der dritten in die vierte Übersetzungsstufe steigt das Drehmoment am Abtrieb vom 1,421-fachen des Getriebeeingangsmomentes auf das 3,364-fache des Getriebeeingangsmomentes an und die elektrische Maschine EM1 muss das 1,36-fache der Leistung der Brennkraftmaschine 2 aufbringen, wenn die erste Übersetzungsstufe beispielsweise den Wert 3,364 hat und die dritte Übersetzungsstufe den Wert 1,421 aufweist.

Grundsätzlich ist auch mit dem in Fig. 4 dargestellten Ausführungsbeispiel des mehrgängigen Planetenkoppelgetriebes 3 nach der Erfindung neben einem verschleißfreien Anfahrbetrieb sowohl ein Rekuperationsbetrieb im Schubbetrieb als auch ein Boostbetrieb während eines positiven Beschleunigungsvorganges des Fahrzeuges durchführbar. Des Weiteren ist die Brennkraftmaschine 2 auch mit einer Motor-Start-Stopp-Funktion ausführbar und das Fahrzeug elektrisch leistungsverzweigt betreibbar, um ein Fahrzeug mit geringem Kraftstoffverbrauch zur Verfügung stellen zu können.

Ist das Planetenkoppelgetriebe 3 wie in Fig. 2 dargestellt ohne die weitere elektrische Maschine EM2 ausgeführt, ist für den motorischen Betrieb der elektrischen Maschine EM1 während der Darstellung der ersten Übersetzungsstufe ein Sicherheitspuffer an elektrischer Energie in einem der elektrischen Maschine EM1 zugeordneten elektrischen Speicher vorzusehen. Ansonsten ist die elektrische Maschine EM1 zur Darstellung der weiteren Übersetzungsstufen des Planetenkoppelgetriebes 3 über weite Betriebsbereiche im generatorischen Betrieb betreibbar und mit der elektrischen Maschine EM1 elektrische Energie erzeugbar, die zum Beladen eines der elektrischen Maschine EM1 zugeordneten elektrischen Speichers verwendet werden kann.

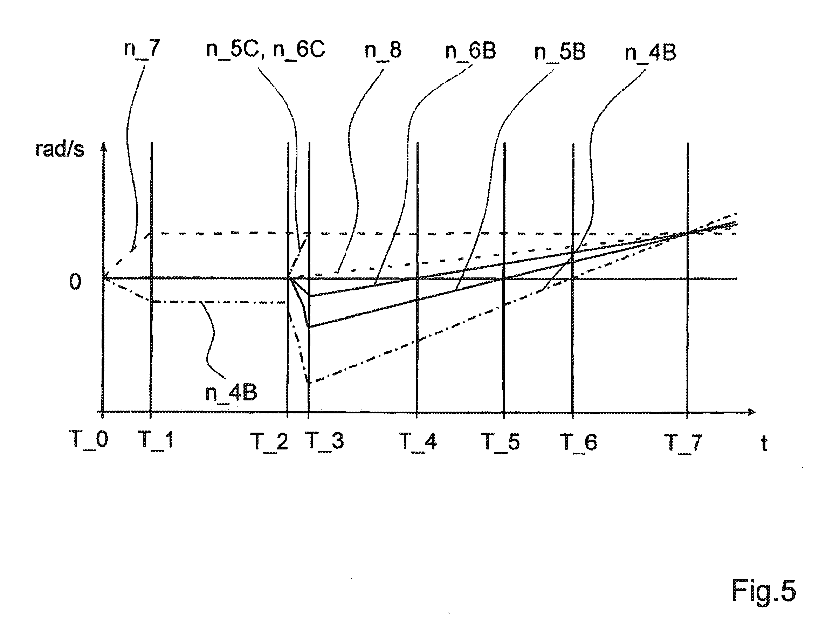

Fig. 5 zeigt mehrere Drehzahlverläufe verschiedener Getriebewellen des Planetenkoppelgetriebes 3 über der Zeit t, welche sich während mehrerer aufeinander folgender Hochschaltungen im Planetenkoppelgetriebe 3 gemäß Fig. 2 oder gemäß Fig. 3 bzw. Fig. 4 einstellen, wenn die elektrische Maschine EM1 zur Darstellung möglichst verlustfreier und zugkraftunterbrechungsfreier Schaltungen in der nachbeschriebenen Art und Weise betrieben wird.

Zu einem Zeitpunkt T_0 steigt die Drehzahl n_7 der Getriebeeingangswelle 7 aufgrund eines brennkraftmaschinenseitigen oder elektromaschinenseitigen Antriebs durch die Brennkraftmaschine 2 und/oder die weitere elektrische Maschine EM2 an und wird ab einem Zeitpunkt T_1 konstant auf diesem Niveau gehalten. Gleichzeitig beginnt das Hohlrad 4B des ersten Planetenradsatzes 4 mit zu der Drehzahl n_7 der Getriebeeingangswelle 7 entgegengesetzter Richtung zu drehen, wobei sich die Drehzahl n_4B des Hohlrades 4B des ersten Planetenradsatzes 4 bei geöffneten Schaltelementen A, B, D, E aufgrund der Drehzahl n_7 der Getriebeeingangswelle 7 und dem festen Übersetzungsverhältnis des ersten Planetenradsatzes 4 einstellt.

Die Drehzahl n_5B des Hohlrades 5B des zweiten Planetenradsatzes 5, die Drehzahl n_6B des Hohlrades 6B des dritten Planetenradsatzes 6 sowie die Drehzahlen n_5C und n_6C der Sonnenräder 5C und 6C des zweiten Planetenradsatzes 5 und des dritten Planetenradsatzes 6 sind zwischen den Zeitpunkten T_0 und T_2 Null. Zum Zeitpunkt T_2 wird das Schaltelement A geschlossen und die Drehzahlen n_5C und n_6C der Sonnenräder 5C und 6C drehen mit der Drehzahl n_7 der Getriebeeingangswelle 7, während die Drehzahlen n_5B und n_6B der Hohlräder 5B und 6B in der in Fig. 5 dargestellten Art und Weise bis zu einem Zeitpunkt T_3 ansteigen.

Zum Zeitpunkt T_3 wird die elektrische Maschine EM1 generatorisch betrieben und bremst das Hohlrad 6B des dritten Planetenradsatzes 6 ab, wobei die Drehzahlen n_4B und n_5B der Hohlräder 4B und 5B reduziert werden. Zu einem Zeitpunkt T_4 ist die Drehzahl n_6B des Hohlrades 6B des dritten Planetenradsatzes 6 Null und im Planetenkoppelgetriebe 3 die erste Übersetzungsstufe eingelegt, wobei in diesem Betriebszustand der elektrischen Maschine EM1 keine elektrische Energie mehr erzeugt wird. Die Drehzahl n_8 der Getriebeausgangswelle 8 steigt mit Inbetriebnahme der elektrischen Maschine EM1 ab dem Zeitpunkt T_3 kontinuierlich an.

Nach dem Zeitpunkt T_4 wird das Hohlrad 6B von der nunmehr motorisch betriebenen elektrischen Maschine EM1 angetrieben, was einen Anstieg der Drehzahl n_8 der Getriebeausgangswelle 8 und der Drehzahl 6B des Hohlrades 6B sowie eine Reduzierung der Drehzahlen n_4B und n_5B der Holräder 4B und 5B führt. Zu einem Zeitpunkt T_5 ist die Drehzahl n_5B des Hohlrades 5B des zweiten Planetenradsatzes Null und das Schaltelement E über die elektrische Maschine EM1 synchronisiert, wobei im Planetenkoppelgetriebe 3 die zweite Übersetzungsstufe eingelegt ist, wenn das Schaltelement E geschlossen ist.

Wird die Drehzahl n_6B des Hohlrades 6B nach dem Zeitpunkt T_5 in der in Fig. 5 dargestellten Art und Weise von der motorisch betriebenen elektrischen Maschine EM1 weiter erhöht, steigt die Drehzahl des Hohlrades n_5B bei geöffnetem Schaltelement E an. Das Hohlrad 4B steht zum Zeitpunkt T_6 still, so dass das Schaltelement D über die motorisch betriebene elektrische Maschine EM1 synchronisiert ist und verschleißfrei schließbar ist. Ist das Schaltelement D geschlossen, ist im Planetenkoppelgetriebe 3 die dritte Übersetzungsstufe eingelegt.

Nach dem Zeitpunkt T_6 wird das Hohlrad 6B von der elektrischen Maschine EM1 weiter angetrieben und dessen Drehzahl n_6B weiter erhöht, bis alle Wellen des Planetenkoppelgetriebes 3 zum Zeitpunkt T_7 die gleiche Drehzahl aufweisen und das Schaltelement B synchronisiert ist. In diesem Betriebszustand des Planetenkoppelgetriebes ist das Schaltelement B verschleiß- und verlustfrei schließbar, wobei bei geschlossenem Schaltelement B im Planetenkoppelgetriebe 3 die vierte Übersetzungsstufe eingelegt ist.

### Bezugszeichen

- 1: Fahrzeug
- 2: Brennkraftmaschine
- 3: Planetenkoppelgetriebe
- 4: erster Planetenradsatz
- 4A: Planetenträger
- 4B: Hohlrad
- 5: zweiter Planetenradsatz
- 5A: Planetenträger
- 5B: Hohlrad
- 5C: Sonnenrad
- 6: dritter Planetenradsatz
- 6A: Planetenträger
- 6B: Hohlrad
- 6C: Sonnenrad
- 7: Getriebeeingangswelle
- 8: Getriebeausgangswelle
- 9: Gehäuse
- 10: Rotor
- 11: Stator
- 12: Getriebewelle
- 13: formschlüssiges Schaltelement, Klaue
- 14: Motorausgangswelle
- 15: Kupplung
- 16: Pumpeneinrichtung
- 17: Antriebsstrang
- A, B, D, E: Schaltelement
- EM1, EM2: elektrische Maschine
- n_4B, n_5B, n_5C, n_6B, n_6C, n_7, n_8: Drehzahlverlauf
- t: Zeit
- T_0 bis T_7: diskreter Zeitpunkt

## Patentansprüche

1. Mehrgängiges Planetenkoppelgetriebe (3) mit einer Getriebeeingangswelle (7), einer Getriebeausgangswelle (8), mehreren Planetenradsätzen (4, 5, 6) und mehreren Schaltelementen (A, B, D, E ), wobei in Abhängigkeit einer Betätigung der Schaltelemente (A, B, D, E ) verschiedene Übersetzungen darstellbar sind, wobei
- ein Sonnenrad eines ersten Planetenradsatzes (4) mit der Getriebeeingangswelle (7),
- ein Planetenträger (4A) des ersten Planetenradsatzes (4) mit einem Hohlrad (5B) eines zweiten Planetenradsatzes (5),
- ein Planetenträger (5A) des zweiten Planetenradsatzes (5) mit einem Hohlrad (6B) eines dritten Planetenradsatzes (6),
- ein Planetenträger (6A) des dritten Planetenradsatzes (6) mit der Getriebeausgangswelle (8), und
- ein Sonnenrad (5C) des zweiten Planetenradsatzes (5) mit einem Sonnenrad (6C) des dritten Planetenradsatzes (6)
verbunden sind,
**gekennzeichnet, durch**
- wenigstens eine einen Rotor (10) und einen Stator (11) aufweisende elektrische Maschine (EM1), deren Stator (11) drehfest mit einem gehäusefesten Bauteil (9) und der Rotor (10) mit dem Hohlrad (6B) des dritten Planetenradsatzes (6) verbunden sind, und
- ein formschlüssiges Schaltelement (13), mittels welchem das Hohlrad (6B) des dritten Planetenradsatzes (6) mit dem gehäusefesten Bauteil (9) in einer ersten Übersetzungsstufe drehfest verbindbar ist.

2. Mehrgängiges Planetenkoppelgetriebe nach Anspruch 1, **dadurch gekennzeichnet, dass** eine als Kurbelwellen-Starter-Generator-Einheit für eine Brennkraftmaschine (2) ausgebildete weitere elektrische Maschine (EM2) vorgesehen ist, die über ein reibschlüssiges Schaltelement (15) mit der Getriebeeingangswelle (7) verbindbar ist.

3. Mehrgängiges Planetenkoppelgetriebe nach Anspruch 1 oder 2, **dadurch gekennzeichnet, dass** die Schaltelemente (A, B, D, E) wenigstens teilweise als reibschlüssige Schaltelemente ausgeführt sind.

4. Mehrgängiges Planetenkoppelgetriebe nach einem der Ansprüche 1 bis 3, **dadurch gekennzeichnet, dass** die Schaltelemente (A, B, D, E) wenigstens teilweise als formschlüssige Schaltelemente ausgeführt sind.

5. Mehrgängiges Planetenkoppelgetriebe nach einem der Ansprüche 1 bis 4, **dadurch gekennzeichnet, dass** wenigstens eines der Schaltelemente (A, B, D, E) durch Einleiten eines Drehmomentes der elektrischen Maschine (EM1) in den der elektrischen Maschine (EM1) zugeordneten Planetenradsatz (6) synchronisierbar ist.

6. Mehrgängiges Planetenkoppelgetriebe nach einem der Ansprüche 1 bis 5, **dadurch gekennzeichnet, dass** das über die elektrische Maschine (EM1) eingeleitete Drehmoment auf die mit einem Abtrieb eines Fahrzeuges verbindbare Getriebeausgangswelle (8) führbar ist.

7. Mehrgängiges Planetenkoppelgetriebe nach einem der Ansprüche 2 bis 6, **dadurch gekennzeichnet, dass** die elektrische Maschine (EM1) im motorischen Betrieb von der generatorisch betriebenen Kurbelwellen-Starter-Generator-Einheit (EM2) mit elektrischer Energie versorgbar ist.

8. Mehrgängiges Planetenkoppelgetriebe nach einem der Ansprüche 1 bis 7, **dadurch gekennzeichnet, dass** die elektrische Maschine (EM1) im generatorischen Betrieb zum Laden eines elektrischen Speichers verwendbar ist.

## Claims

1. Multi-speed planetary coupling gearing (3) having a gearing input shaft (7), a gearing output shaft (8), a plurality of planet gear sets (4, 5, 6) and a plurality of shift elements (A, B, D, E), wherein different transmission ratios can be realized as a function of an actuation of the shift elements (A, B, D, E), wherein
- a sun gear of a first planet gear set (4) is connected to the gearing input shaft (7),
- a planet carrier (4A) of the first planet gear set (4) is connected to an internal gear (5B) of a second planet gear set (5),
- a planet carrier (5A) of the second planet gear set (5) is connected to an internal gear (6B) of a third planet gear set (6),
- a planet carrier (6A) of the third planet gear set (6) is connected to the gearing output shaft (8), and
- a sun gear (5C) of the second planet gear set (5) is connected to a sun gear (6C) of the third planet gear set (6),
**characterized by**
- at least one electric machine (EM1) which has a rotor (10) and a stator (11) and the stator (11) of which is rotationally fixedly connected to a component (9) fixed with respect to a housing, and the rotor (10) is connected to the internal gear (6B) of the third planet gear set (6), and
- a positively locking shift element (13) by means of which, in a first transmission ratio stage, the internal gear (6B) of the third planet gear set (6) can be rotationally fixedly connected to the component (9) fixed with respect to the housing.

2. Multi-speed planetary coupling gearing according to Claim 1, **characterized in that** a further electric machine (EM2) is provided which is designed as a crankshaft starter-generator unit for an internal combustion engine (2) and which can be connected to the gearing input shaft (7) by means of a frictionally engaging shift element (15).

3. Multi-speed planetary coupling gearing according to Claim 1 or 2, **characterized in that** the shift elements (A, B, D, E) are formed at least in part as frictionally engaging shift elements.

4. Multi-speed planetary coupling gearing according to one of Claims 1 to 3, **characterized in that** the shift elements (A, B, D, E) are formed at least in part as positively locking shift elements.

5. Multi-speed planetary coupling gearing according to one of Claims 1 to 4, **characterized in that** at least one of the shift elements (A, B, D, E) can be synchronized by the introduction of a torque of the electric machine (EM1) into the planet gear set (6) assigned to the electric machine (EM1).

6. Multi-speed planetary coupling gearing according to one of Claims 1 to 5, **characterized in that** the torque introduced by means of the electric machine (EM1) can be conducted to the gearing output shaft (8) which can be connected to a drive output of a vehicle.

7. Multi-speed planetary coupling gearing according to one of Claims 2 to 6, **characterized in that** the electric machine (EM1), when operating in motor mode, can be supplied with electrical energy by the crankshaft starter-generator unit (EM2) operated in generator mode.

8. Multi-speed planetary coupling gearing according to one of Claims 1 to 7, **characterized in that** the electric machine (EM1), when operating in generator mode, can be used to charge an electrical storage means.

## Revendications

1. Transmission planétaire couplée, à plusieurs rapports (3), comprenant un arbre d'entrée de boîte de vitesse (7), un arbre de sortie de boîte de vitesse (8), plusieurs trains planétaires (4, 5, 6) et plusieurs éléments de changement de vitesse (A, B, D, E), différents rapports de transmission pouvant être réalisés en fonction d'un actionnement des éléments de changement de vitesse (A, B, D, E),
- une roue solaire d'un premier train planétaire (4) étant connectée à l'arbre d'entrée de boîte de vitesse (7),
- un porte-satellites (4A) du premier train planétaire (4) étant connecté à une couronne (5B) d'un deuxième train planétaire (5),
- un porte-satellites (5A) du deuxième train planétaire (5) étant connecté à une couronne (6B) d'un troisième train planétaire (6),
- un porte-satellites (6A) du troisième train planétaire (6) étant connecté à l'arbre de sortie de la boîte de vitesse (8), et
- une roue solaire (5C) du deuxième train planétaire (5) étant connectée à une roue solaire (6C) du troisième train planétaire (6),
**caractérisée par**
- au moins une machine électrique (EM1) présentant un rotor (10) et un stator (11), dont le stator (11) est connecté de manière solidaire en rotation à un composant (9) fixé au boîtier, et le rotor (10) est connecté à la couronne (6B) du troisième train planétaire (6), et
- un élément de changement de vitesse à engagement positif (13), au moyen duquel la couronne (6B) du troisième train planétaire (6) peut être connectée de manière solidaire en rotation au composant (9) fixé au boîtier dans un premier étage de transmission.

2. Transmission planétaire couplée, à plusieurs rapports, selon la revendication 1, **caractérisée en ce qu'**une machine électrique supplémentaire (EM2) réalisée sous forme d'unité de vilebrequin-démarreur-générateur pour un moteur à combustion interne (2) est prévue, laquelle peut être connectée par le biais d'un élément de changement de vitesse (15) à engagement par friction à l'arbre d'entrée de boîte de vitesse (7).

3. Transmission planétaire couplée, à plusieurs rapports, selon la revendication 1 ou 2, **caractérisée en ce que** les éléments de changement de vitesse (A, B, D, E) sont réalisés au moins en partie sous forme d'éléments de changement de vitesse à engagement par friction.

4. Transmission planétaire couplée, à plusieurs rapports, selon l'une quelconque des revendications 1 à 3, **caractérisée en ce que** les éléments de changement de vitesse (A, B, D, E) sont réalisés au moins en partie sous forme d'éléments de changement de vitesse à engagement positif.

5. Transmission planétaire couplée, à plusieurs rapports, selon l'une quelconque des revendications 1 à 4, **caractérisée en ce qu'**au moins l'un des éléments de changement de vitesse (A, B, D, E) peut être synchronisé par introduction d'un couple de la machine électrique (EM1) dans le train planétaire (6) associé à la machine électrique (EM1).

6. Transmission planétaire couplée, à plusieurs rapports, selon l'une quelconque des revendications 1 à 5, **caractérisée en ce que** le couple introduit par le biais de la machine électrique (EM1) peut être conduit à l'arbre de sortie de la boîte de vitesse (8) pouvant être connecté à une prise de force d'un véhicule.

7. Transmission planétaire couplée, à plusieurs rapports, selon l'une quelconque des revendications 2 à 6, **caractérisée en ce que** la machine électrique (EM1) peut être alimentée en énergie électrique en mode moteur par l'unité de vilebrequin-démarreur-générateur (EM2) fonctionnant comme générateur.

8. Transmission planétaire couplée, à plusieurs rapports, selon l'une quelconque des revendications 1 à 7, **caractérisée en ce que** la machine électrique (EM1) peut être utilisée en mode générateur pour charger un accumulateur électrique.
